# NEW EUROPEAN PATENT SPECIFICATION

(11) **EP 2 791 472 B2**
(45) Date of publication and mention of the opposition decision: **11.05.2022**
(45) Mention of the grant of the patent: 13.02.2019
(21) Application number: 12794571.5
(22) Date of filing: 16.10.2012
(51) Int. Cl.: F01D 5/18

(54) **FILM COOLED TURBINE COMPONENT**
FILMGEKÜHLTE TURBINENKOMPONENTE
COMPOSANT DE TURBINE REFROIDI PAR FILM

(30) Priority: 16.12.2011 US 201113328733
(43) Date of publication of application: 22.10.2014
(73) Proprietor: Raytheon Technologies Corporation, Farmington, CT 06032 (US)
(72) Inventor: SANTORO, Stephanie, Wolcott, CT 06716 (US); DEVORE, Matthew A., Cromwell, CT 06416 (US); GAUTSCHI, Steven B., Naugatuck, CT 06770 (US)
(74) Representative: Dehns
(86) International application number: PCT/US2012/060421
(87) International publication number: WO 2013/089913

(56) References cited:
- EP-A1- 1 655 453
- EP-A2- 1 001 136
- EP-A2- 1 992 784
- DE-A1-102005 013 406
- US-A- 5 062 768
- US-A- 5 458 461
- US-A- 5 498 133
- US-A1- 2005 079 060
- US-A1- 2008 152 475
- US-A1- 2008 156 943
- US-A1- 2009 162 204
- US-A1- 2009 317 227
- US-A1- 2009 317 234
- US-A1- 2010 047 056
- US-A1- 2011 236 214
- US-B1- 6 213 714
- US-B1- 7 597 540
- US-B1- 7 789 626
- US-B1- 7 878 761
- US-B2- 7 179 047
- US-B2- 7 500 823
- US-B2- 7 712 316

## Description

### BACKGROUND OF THE INVENTION

### 1. Technical Field

This invention relates generally to gas turbine engines and particularly to film cooled turbine airfoil rotor blades employed in such engines.

### 2. Background Information

Gas turbine engines, such as those which power aircraft and industrial equipment, employ a compressor to compress air which is drawn into the engine, and a combustor, which receives air from the compressor, injects fuel into the compressed air and ignites the fuel air mixture, converting the fuel air mixture into a high temperature working fluid which is exhausted to the engine's turbine. The working fluid flows through a turbine which captures the energy associated with the working fluid. The working fluid temperature is typically higher than the melting point of the materials used to manufacture turbine components such as rotor blades and stator vanes. Therefore, it has become the practice to cool such components internally and externally with cooling air, typically from the engine's compressor. In the case of the aforementioned turbine rotor blades and stator vanes, there are three well-known methods for cooling such components. One method is the convective cooling of such components by flowing compressor discharge air through radial passages within the interiors of those components. A second method of cooling such components involves the impingement of air against the interior surfaces of those components. A third method critical to achieve adequate cooling of turbine rotor blades and stator vanes, involves the establishment of a film of air on the surfaces of those components exposed to the engine's working fluid. The film of air flowing over the surfaces of the rotor blades and vanes acts as a thermal barrier, shielding the surfaces of those components from the destructive thermal effects of the working fluid flowing thereover. Typically, air flowing through the internal radial convective cooling passages in the turbine blades and vanes is channeled to the blade and vane surfaces through film cooling holes which open onto the blade and vane surfaces and connect to the internal radial convective cooling passages which feed compressor air to the film cooling holes for establishing the cooling air film at the blade and vane surfaces. With such film cooling, it is imperative that the cooling air film remain attached to the blade and vane surfaces to achieve the requisite protection of those surfaces from the deleterious thermal effects of the working fluid passing over the component surfaces. It will be appreciated that separation of the cooling air film from the blade and vane surfaces, also known as lift-off or blow-off of the cooling film due to the contact of the working fluid therewith, will severely compromise the cooling air film's ability to shield the blade and vane surfaces from the destructive effects thereon of working fluid heat. One known technique for reducing cooling film lift off or blow off from the blade and vane surfaces involves the use of diffuser cooling hole openings at the surfaces. Such diffuser openings are usually conical in shape for reducing the velocity and dynamic pressure of the cooling air as it exits the film cooling holes at the blade and vane surfaces. However, intricate and therefore somewhat sophisticated and costly manufacturing techniques such as electro-discharge machining, are required to form the diffuser openings of the film cooling holes and therefore contributes significantly to the cost of manufacture of the turbine blades and vanes. Moreover, known diffuser hole opening configurations, while being suitable for rotating turbine blades, may not be suitable for stationary turbine stator vanes because such diffuser hole configurations may require the influence of centrifugal force on air flowing through the diffuser hole opening for the diffuser hole opening to function properly in establishing a fluid film at the surface over which the working fluid flows.

As aircraft and industrial equipment powered by gas turbine engines become larger and more complex, the thrust output requirements of gas turbine engines is continually increasing. One of the most well-known techniques for increasing the thrust output of a gas turbine engine to meet the ever-increasing thrust output demands thereof is increasing the mass flow of working fluid passing through the engine's turbine and increasing the temperature of the working fluid exhausted to the turbine from the engine's combustor. Increasing the mass flow of the working fluid passing through the turbine requires larger and heavier turbine component parts and may therefore increase the weight of the engine beyond that required to meet the design requirements and weight constraints of associated aircraft or other equipment which the engine powers.

Modern gas turbine engine turbine blades and vanes sometimes employ high-lift airfoil shapes to maximize the ability of the turbine to capture energy from the working fluid, thereby reducing the need for increasing the flow of working fluid through the turbine for increased turbine performance and the attendant larger and heavier turbine components required thereby. However, working fluid flow over such high lift airfoil surfaces results in high ratios of working fluid static pressure to total pressure (typically greater than 0.9) across substantially the entire airfoil surface. Such high static to total pressure ratios cross the airfoil surfaces of the turbine blades and vanes results in an increased risk of cooling air film blow-off from the airfoil surfaces. Accordingly, there is a continuing effort to achieve high lift turbine airfoils for gas turbine engines wherein the risk of cooling air film blow off from the airfoil surfaces is minimized without the aforementioned complex and costly shaped film cooling hole openings onto the airfoil surfaces which may not be suitable for use with stationary stator vanes.

A turbine component having the features of the preamble of claim 1 is disclosed in EP-A-1655453. Other cooled turbine components are disclosed in US-B-7500823, DE-A-102005013046 and EP-A-1001136.

### SUMMARY OF THE DISCLOSURE

In accordance with the present invention, there is provided an air-cooled turbine rotor blade as set forth in claim 1.

Since the necessity for shaped film cooling hole openings is eliminated, the turbine component cooling film of the present invention is achieved simply and economically.

### BRIEF DESCRIPTION OF THE DRAWINGS

FIG. 1 is a schematic view of a turbofan gas turbine engine of the type employing the present invention;
FIG. 2 is an isometric view of a gas turbine engine turbine rotor blade of the type employing the present invention; and
FIG. 3 is a sectional view of the rotor blade of FIG. 2 taken in the direction of line 3-3 of FIG. 2.

### DETAILED DESCRIPTION OF THE INVENTION

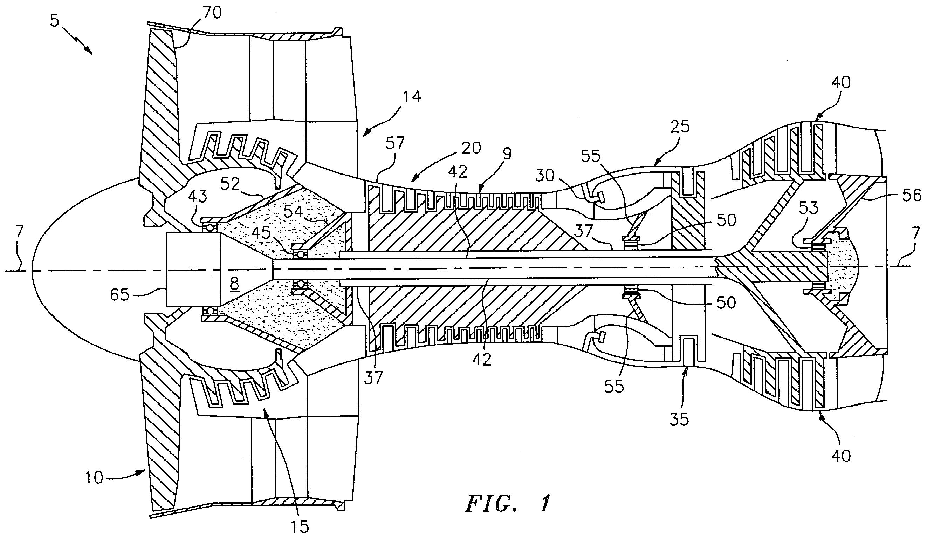

Referring to FIG. 1, a turbofan gas turbine engine 5 has a longitudinal axis 7 about which the rotors 8 within stator 9 rotate. Stator 9 circumscribes the rotors. A fan 10 disposed at the engine inlet draws air into the engine. A low pressure compressor 15 located immediately downstream of fan 10 compresses air exhausted from fan 10 and a high pressure compressor 20 located immediately downstream of low pressure compressor 15, further compresses air received therefrom and exhausts such air to combustors 25 disposed immediately downstream of high pressure compressor 20. Combustors 25 receive fuel through fuel injectors 30 and ignite the fuel/air mixture. The burning fuel-air mixture (working medium fluid) flows axially to a high pressure turbine 35 which extracts energy from the working medium fluid and in so doing, rotates hollow shaft 37, thereby driving the rotor of high pressure compressor 20. The working medium fluid exiting the high pressure turbine 35 then enters low pressure turbine 40, which extracts further energy from the working medium fluid. The low pressure turbine 40 provides power to drive the fan 10 and low pressure compressor 15 through low pressure shaft 42, which is disposed interiorly of the hollow shaft 37, coaxial thereto. Working medium fluid exiting the low pressure turbine 40 provides axial thrust for powering an associated aircraft (not shown) or a free turbine (also not shown).

Bearings 43, 45, 50 and 53 radially support the concentric high pressure and low pressure turbine shafts from separate frame structures 52, 54, 55 and 56 respectively, attached to engine case 57, which defines the outer boundary of the engine's stator 9 which circumscribes rotors 8. However, the present invention is also well suited for mid-turbine frame engine architectures wherein the upstream bearings for the low and high pressure turbines are mounted on a common frame structure disposed longitudinally (axially) between the high and low pressure turbines.

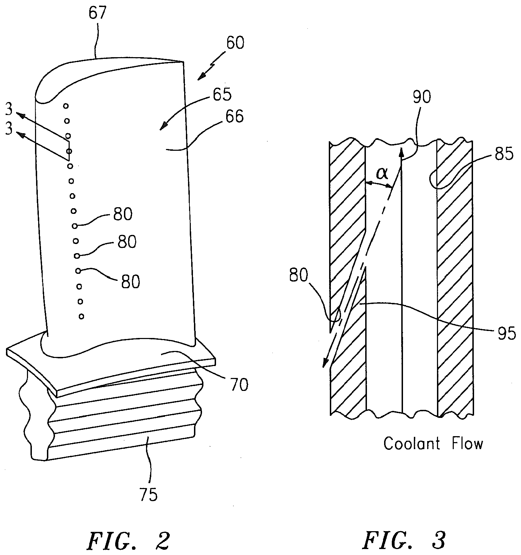

Referring to FIG. 2, a high pressure turbine blade 60 comprises an airfoil shaped surface 65 having a concave pressure portion 66 and a convex suction portion 67 extending radially outwardly from a platform 70 which defines the radially innermost boundary of the working fluid flow path through high pressure turbine 35. A dovetail shaped root portion 75 is provided at the radially innermost end of blade 60 and is accommodated within a mating slot provided in the radially outer portion of a disk shaped blade retainer (not shown) mounted on the turbine shaft. A number of film cooling holes 80 open onto the airfoil surface 65 to provide a film of cooling air which flows over the airfoil surface 65 thereby providing a thermal boundary layer to protect the surface 65 from the deleterious thermal effects associated with working fluid which passes over blade 60 as the working fluid flows through the turbine.

Turbine blade 60 is a high lift airfoil which, as described hereinabove, maximizes the energy captured from the working fluid by the turbine blade. As further set forth hereinabove, working fluid flowing over the airfoil surface of such high-lift turbine blades exhibits a ratio of static pressure to total pressure in proximity to airfoil surface 65 greater than approximately 0.9 across a substantial portion of the airfoil surface of blade 60. As further set forth hereinabove, such levels of static pressure to total pressure ratio can, with prior art film cooling hole configurations, cause the cooling air film flowing over the airfoil surface to separate or blow off the airfoil surface thereby severely jeopardizing the film's ability to protect the airfoil surface from the extreme destructive thermal effects of working fluid heat.

Referring to FIG. 3, the interior of turbine blade 60 is provided with a radial cooling air passage 85 which accommodates a radially outward flow of cooling air provided by the engine's compressor in the direction of arrow 90. Cooling air flowing through passage 85 convectively cools the body of the blade. Each of film cooling holes 80 extends between airfoil surface 65 and radial cooling passage 85, intersecting radial that portion of cooling passage 85 immediately upstream of film cooling hole 80 at an acute angle α of approximately 25° whereby cooling air flowing through radial cooling passage 85 is angularly displaced greater than 90 degrees as it enters film cooling holes 80. This angular displacement of cooling air as it enters film cooling holes 80 from radial cooling passage 85, lowers the momentum of cooling air flowing through film cooling hole 80 prior to reaching the airfoil surface and therefore enhances the cooling air film's ability to remain attached to airfoil surface 65 to maximize the thermal protection of airfoil surface 65 afforded by the film from the deleterious thermal effects of the working fluid passing over the blade surface.

Still referring to FIG. 3, the sidewalls of radial passage 85 and film cooling holes 80 intersect to define a flow diverter 95 which effects the turning of the cooling air as it enters film cooling holes 80 from radial passage 85.

As shown in FIG. 3, film cooling holes 80 are of a generally constant cross-sectional area throughout the length thereof since the momentum reducing turning of the cooling air as it enters film cooling holes 80 from radial passage 85 reduces the momentum of the cooling air flowing through holes 80 and thus renders shaped outer diffuser openings of the film cooling holes unnecessary to maintain the cooling air film attached to airfoil surface 65. Accordingly, since shaped diffuser film cooling hole openings are unnecessary with the momentum reducing turning of the cooling air as it enters the film cooling holes from the radial cooling passage, the film cooling hole configuration of the present invention is equally well-suited, but not claimed, for stationary stator vane and outer air seals since centrifugal force is not necessary to keep any shaped cooling hole openings filled with cooling air to prevent blow off of the cooling air film from airfoil surface 65. Furthermore, since shaped diffuser cooling hole openings are not employed with the present invention, the film cooling holes may be conveniently and economically produced in the turbine blades and vanes by well-known and economical drilling methods, thereby rendering the expensive and intricate electro-discharge machining of shaped film cooling hole openings unnecessary.

While the present invention has been described within the context of a high lift gas turbine engine turbine rotor blade, it will be appreciated that the invention herein is equally well-suited for conventional (not high lift) turbine blades wherein the risk of cooling air film blow off from the blade's airfoil surfaces is not as high. Furthermore, while a specific number of film cooling holes opening onto a specific portion of the rotor blade's airfoil surface have been illustrated, the invention herein may be employed with any required number of film cooling holes opening onto any portion of the blade's airfoil surface (pressure or suction) as required to achieve required film cooling of the surface.

Accordingly, it will be understood that various modifications to the preferred embodiment described herein may be made without departing from the scope of the present invention which is defined by the appended claims.

## Claims

1. An air-cooled turbine rotor blade (60) comprising:
a platform (70) and a tip,
an outer surface (65) extending radially outward from said platform (70) and adapted to be cooled by a film of cooling air flowing thereover;
a radial cooling air passage (85) extending through the interior of said blade (60) which accommodates, when in use, a radially outward flow of cooling air; and
a plurality of film cooling holes (80) extending between said outer surface (65) and said radial cooling passage (85), said plurality of film cooling holes (80) being arranged in a row extending from adjacent said platform (70) to adjacent said tip; **characterized in that**:
each of said film cooling holes (80) has a substantially constant cross-sectional area along the length thereof;
each of said film cooling holes (80) in said row intersects said radial cooling passage (85) such that said film cooling hole (80) and that portion of said radial cooling passage (85) immediately upstream from said intersection thereof with each of said film cooling holes (80) in the direction of the cooling air flow through the radial cooling passage (85) defining an acute angle (α), whereby cooling air entering said film cooling hole (80) from said radial cooling passage (85) is angularly displaced greater than 90° from the flow of cooling air through said radial cooling passage (85) for decreasing the momentum of airflow through said film cooling hole (80) and any tendency of cooling air discharged from said film cooling hole (80) at said outer airfoil surface (65) to separate therefrom;
the film cooling holes (80) are configured to open onto the outer surface (65) to provide a film of cooling air which flows over the outer surface thereby providing a thermal boundary layer to protect the outer surface (65); and
said acute angle is approximately 25°.

2. The air-cooled turbine component of claim 1, wherein said surface (65) comprises a concave airfoil pressure surface (66).

3. The air-cooled turbine component of claim 1, wherein said surface (65) comprises a convex airfoil suction surface (67).

## Patentansprüche

1. Luftgekühlte Turbinenrotorlaufschaufel (60), umfassend:
eine Plattform (70) und eine Spitze,
eine Außenfläche (65), die sich von der Plattform (70) radial nach außen erstreckt und so ausgelegt ist, dass sie durch einen Kühlluftfilm, der darüber strömt, gekühlt wird;
einen radialen Kühlluftkanal (85), der sich durch das Innere der Laufschaufel (60) erstreckt und der in Betrieb einen Kühlluftstrom radial nach außen aufnimmt; und
eine Vielzahl von Filmkühlungslöchern (80), die sich zwischen der Außenfläche (65) und dem radialen Kühlkanal (85) erstreckt, wobei die Vielzahl von Filmkühlungslöchern (80) in einer Reihe angeordnet ist, die sich von angrenzend an die Plattform (70) zu angrenzend an die Spitze erstreckt; **dadurch gekennzeichnet, dass**:
jedes der Filmkühlungslöcher (80) eine im Wesentlichen konstante Querschnittsfläche entlang der Länge davon aufweist;
jedes der Filmkühlungslöcher (80) in der Reihe den radialen Kühlkanal (85) so schneidet, dass das Filmkühlungsloch (80) und der Abschnitt des radialen Kühlkanals (85) direkt stromaufwärts des Schnittpunkts davon mit jedem der Filmkühlungslöcher (80) in der Richtung des Kühlluftstroms durch den radialen Kühlkanal (85) einen spitzen Winkel (α) definieren, wobei Kühlluft, die in das Filmkühlungsloch (80) von dem radialen Kühlkanal (85) eintritt, um mehr als 90° von dem Kühlluftstrom durch den radialen Kühlkanal (85) winkelversetzt ist, um das Moment des Luftstroms durch das Filmkühlungsloch (80) und um jede Tendenz der Kühlluft, die von dem Filmkühlungsloch (80) an der äußeren Schaufelprofilfläche (65) abgegeben wird, sich davon zu trennen, zu verringern;
die Filmkühlungslöcher (80) so konfiguriert sind, dass sie in die Außenfläche (65) münden, um einen Kühlluftfilm bereitzustellen, der über die Außenfläche strömt, wodurch eine thermische Grenzschicht bereitgestellt wird, um die Außenfläche (65) zu schützen; und
der spitze Winkel annähernd 25° beträgt.

2. Luftgekühlte Turbinenkomponente nach Anspruch 1, wobei die Fläche (65) eine konkave Schaufelprofildruckfläche (66) umfasst.

3. Luftgekühlte Turbinenkomponente nach Anspruch 1, wobei die Fläche (65) eine konvexe Schaufelprofilsaugfläche (67) umfasst.

## Revendications

1. Pale de rotor de turbine refroidie par air (60) comprenant :
une plateforme (70) et une pointe,
une surface extérieure (65) s'étendant radialement vers l'extérieur depuis ladite plateforme (70) et conçue pour être refroidie par un film d'air de refroidissement s'écoulant dessus ;
un passage d'air de refroidissement radial (85) s'étendant à travers l'intérieur de ladite pale (60) qui reçoit, lors de l'utilisation, un écoulement d'air de refroidissement radialement vers l'extérieur ; et
une pluralité de trous de refroidissement de film (80) s'étendant entre ladite surface extérieure (65) et ledit passage de refroidissement radial (85), ladite pluralité de trous de refroidissement de film (80) étant agencés en une rangée s'étendant de ladite plateforme adjacente (70) jusqu'à ladite pointe adjacente ; **caractérisée en ce que** :
chacun desdits trous de refroidissement de film (80) a une section transversale sensiblement constante sur sa longueur ;
chacun desdits trous de refroidissement de film (80) dans ladite rangée croise ledit passage de refroidissement radial (85) de sorte que ledit trou de refroidissement de film (80) et la partie dudit passage de refroidissement radial (85) immédiatement en amont de ladite intersection avec chacun desdits trous de refroidissement de film (80) dans la direction de l'écoulement d'air de refroidissement à travers le passage de refroidissement radial (85) définissant un angle aigu (α), moyennant quoi l'air de refroidissement entrant dans ledit trou de refroidissement de film (80) depuis ledit passage de refroidissement radial (85) est déplacé angulairement de plus de 90° par rapport à l'écoulement d'air de refroidissement à travers ledit passage de refroidissement radial (85) pour diminuer la quantité de mouvement d'écoulement d'air à travers ledit trou de refroidissement de film (80) et toute tendance d'air de refroidissement déchargé dudit trou de refroidissement de film (80) au niveau de ladite surface de profil aérodynamique extérieure (65) pour s'en séparer ;
les trous de refroidissement de film (80) sont configurés pour s'ouvrir sur la surface extérieure (65) pour fournir un film d'air de refroidissement qui s'écoule sur la surface extérieure fournissant ainsi une couche limite thermique pour protéger la surface extérieure (65) ; et
ledit angle aigu est d'environ 25°.

2. Composant de turbine refroidi par air selon la revendication 1, dans lequel ladite surface (65) comprend une surface de pression de profil aérodynamique concave (66).

3. Composant de turbine refroidi par air selon la revendication 1, dans lequel ladite surface (65) comprend une surface d'aspiration de profil aérodynamique convexe (67).
